# EUROPEAN PATENT SPECIFICATION

(11) **EP 3 432 046 B1**
(45) Date of publication and mention of the grant of the patent: **15.02.2023**
(21) Application number: 18184778.1
(22) Date of filing: 20.07.2018
(51) Int. Cl.: G02B 6/44, H02G 11/02

(54) **EQUIPMENT FOR MOORING, CONNECTING, ACCOMMODATING AND DERIVING EXTERNAL FIBRE OPTIC CABLES ON A SUPPORT**
VORRICHTUNG ZUM ANBRINGEN, ANSCHLIESSEN, AUFNEHMEN UND ABLEITEN VON EXTERNEN FASEROPTIKKABELN AUF EINER UNTERSTÜTZUNG
ÉQUIPEMENT PERMETTANT D'AMARRER, DE RACCORDER, D'ACCOMMODER ET DE DÉRIVER DES CÂBLES EXTÉRIEURS À FIBRE OPTIQUE SUR UN SUPPORT

(30) Priority: 21.07.2017 PT 2017110213
(43) Date of publication of application: 23.01.2019
(73) Proprietor: YELCO TECHNOLOGIES, S.A., 3810-744 Aveiro (PT)
(72) Inventor: Leote Silva Batista, Bruno Rafael, P-2675-389 Odivelas (PT); Sierra Couto, Francisco Alberto, P-2675-389 Odivelas (PT)
(74) Representative: Lourenço Martinho do Rosário, Ana Margarida

(56) References cited:
- WO-A2-2015/028619
- JP-A- 2003 248 124
- US-A1- 2007 189 694
- US-A1- 2008 169 116
- US-A1- 2012 177 334
- US-A1- 2015 036 993
- US-A1- 2015 346 450
- US-A1- 2015 378 122

## Description

### Scope of the Invention

The present invention relates to an equipment for telecommunication networks, more specifically, to an equipment for mooring, connecting, accommodating and deriving external fibre optic cables in a holder.

With the evolution of technology associated with telecommunication, it is frequently necessary to proceed with structural changes in the equipment, what translates into a permanent need to develop new solutions to keep up with this evolution. More specifically, in the area of optical fibre installations in telecommunications for New Generation Networks there is a need for equipment that allows, to the service providers, Fibre to the Home and Fibre to the Node, to provide the optical fibre signal to the client, complying with the norms and parameters per regulation.

The present invention intends to solve the problems of the FTTx (Fibre to the x) connections with optical fibre air cables in which the long distance from the PDO (point of connection) requires the passage of an optical fibre cable and all its connection accessories through a pole or wall.

### Background of the Invention

One of the disadvantages which the existing equipment to bind, brace or derive the external optical fibre cables presents, is the fact that they do not allow to derive the external optical fibre cables of two and four fibres, and bind them in tension to a wall or pole. On the other hand, the existing equipment possess, maximum, 2 security systems.

Several documents known from the prior art describe fixation methods for cables and holders.

For instance, the document JP2017009828 describes a method of cable fixture, which avoids exposure of the connection sections.

The document CN205691831 describes a device to rearrange and organize the optical fibre cables in a way to avoid interference in the communications. Documents WO2009131893, JP2007017858 and FR2844111 refer to fixation devices for a cable and a holder.

Document PT2012014022 refers to a security device of a cable in a holder.

US 2012/177334 A1 discloses an equipment having all features of the preamble of appended claim 1.

However, in none of the documents it is mentioned the existence of separate wedges, or the possibility of coupling adaptors.

### Advantages of the Invention

One of the advantages of the equipment of the invention is the fact that it solves one of the problems of the existing equipment, allowing two optical fibre external cables from two to four fibres to be derived and fixed in tension to a wall or pole.

It also solves another problem that the existing equipment presents, allowing the utilization of at least four security systems to fixate the cable, while maintaining the levels of mitigation theoretically expected for the transmission of the optic signal in wide ranges.

The existence of separate wedges is an advantage by allowing installation and removal of the cable without losing tension on the second wedge and without loosening the cable.

The module of adaptors couples up to two pairs of optical cables with connectors, type SC and LC and fits in the body by a rotation system to close all the pieces in, with a plug, to fit the slot thus allowing easy access to all the pieces.

The present invention further solves the fixation problem of the external optical fibre cables and allowing the derivation of cables either through adaptors or through connectors, to other connections, being other optic plugins or connection boxes, on the most adequate point of the FTTx network.

Lastly, it also solves the problem of the derivation of aerial optical fibre cables, without adding new elements to the FTTx network, reducing intervention times by the technician in the installation as well as maintenance.

### Brief description of drawings

These and other features can be readily understood by the accompanying drawings, which should be considered as examples and not as restrictive in any way of the scope of the invention. In the drawings, for illustrative purposes, the measurements of some of the elements may be exaggerated and not drawn to scale. The absolute dimensions and the relative dimensions do not correspond to the real relationships for carrying out the invention.

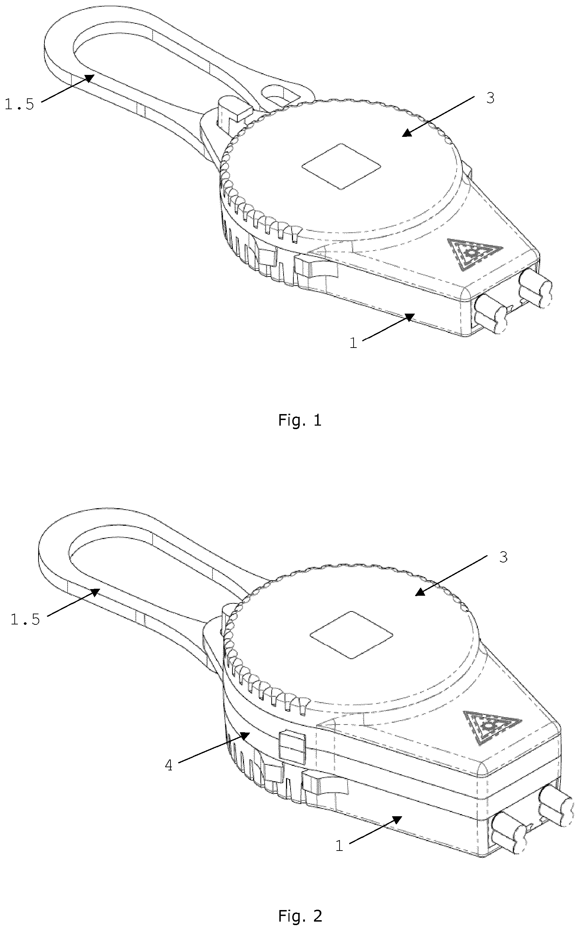

Figure 1 is a view of the equipment closed, in a first embodiment, without the module of adaptors.
Figure 2 is a view of the equipment closed, in a second embodiment, with the module of adaptors.

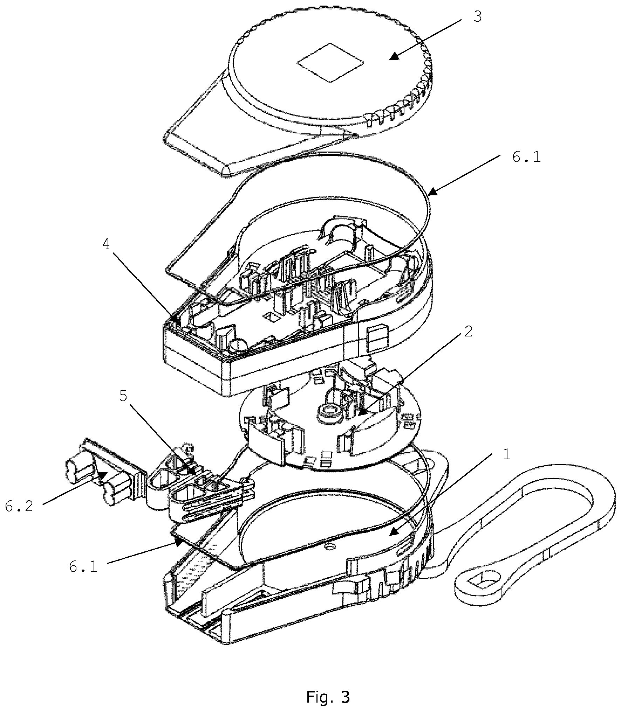

Figure 3 is an exploded perspective view of the equipment.
Figures 4a to 4d are views of the equipment body:

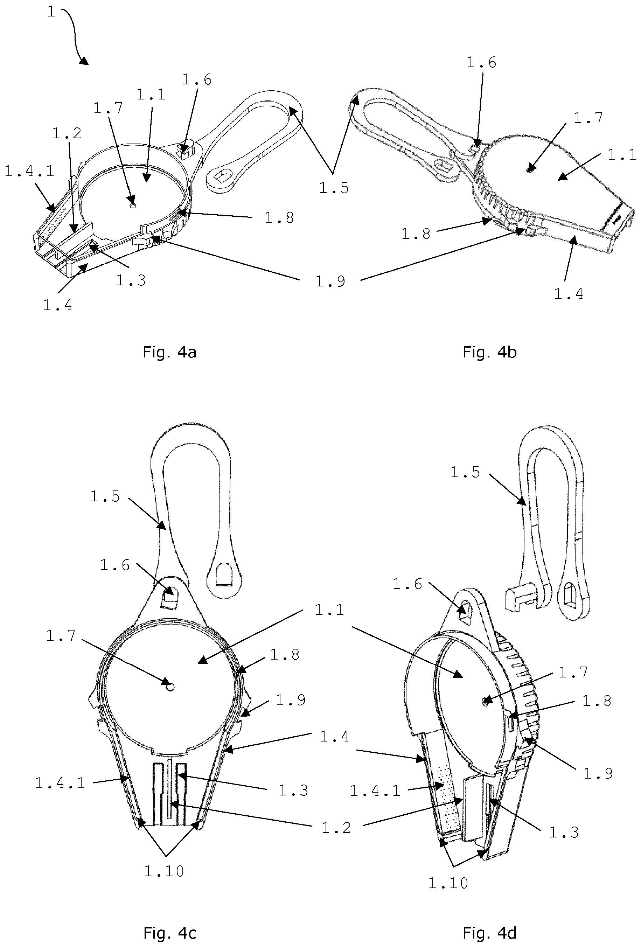

   - Figures 4a and 4d are top perspectives views of the equipment body;
   - Figure 4b is a bottom perspective view of the equipment body;
   - Figure 4c is a top perspective view of the equipment body.

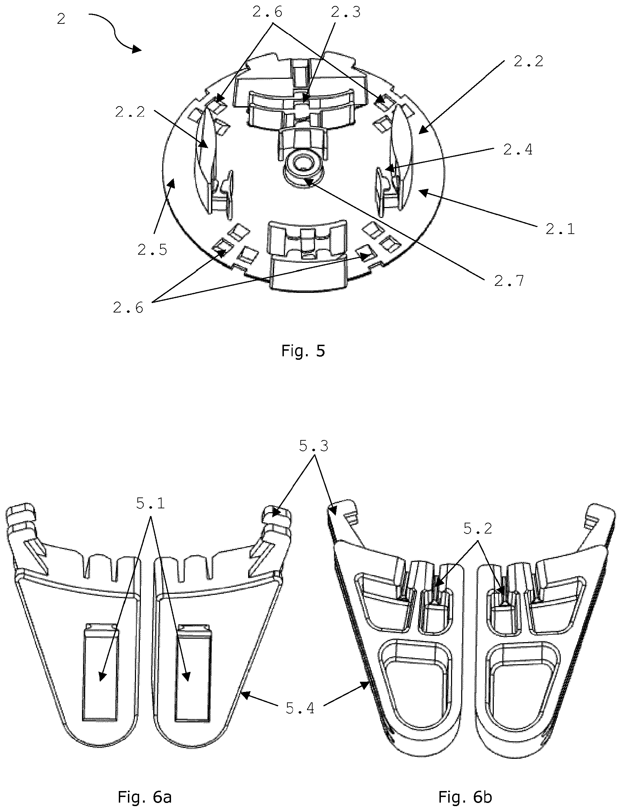

Figure 5 is a top perspective view of the fusion module.
Figures 6a to 6d are perspective views of the two wedges:
   - Figure 6a is a perspective view of the exterior of the two wedges;
   - Figure 6b is a perspective view of the interior of the two wedges;

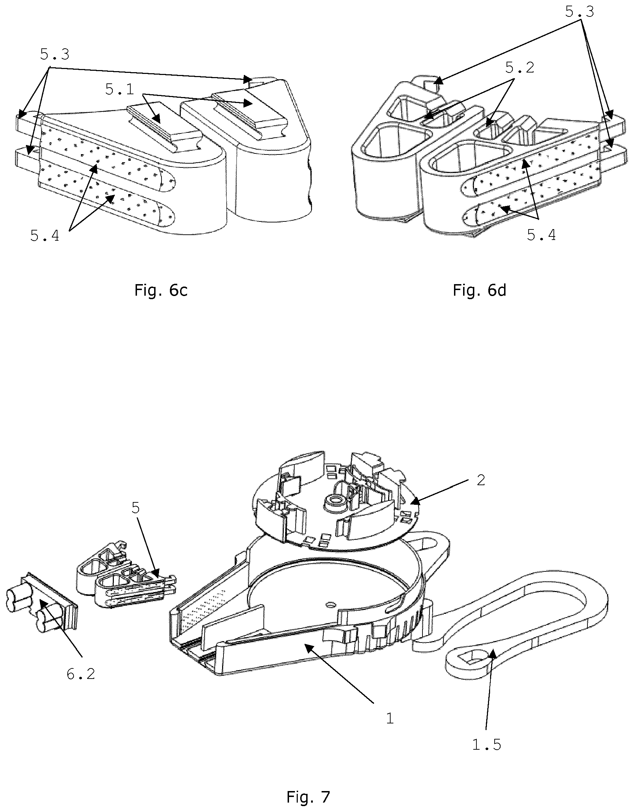

   - Figure 6c is a lateral top perspective view of the exterior of the two wedges;
   - Figure 6d is a lateral bottom perspective view of the exterior of the two wedges.
Figure 7 is an assembling phase of the equipment body, with the fusion module, the two wedges, the clamping loop and the sealing rubber top.

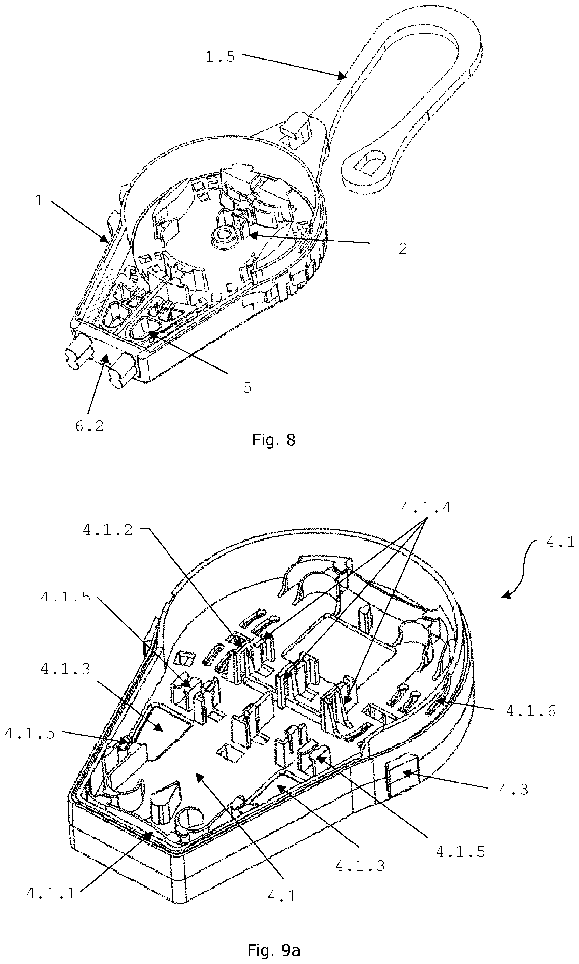

Figure 8 is a perspective view of the body of the equipment, with the fusion module, the two wedges, the clamping loop and the sealing rubber top, all properly coupled.
Figures 9a to 9d are views of the module of adaptors:
   - Figure 9a is a top perspective view of the module of adaptors;

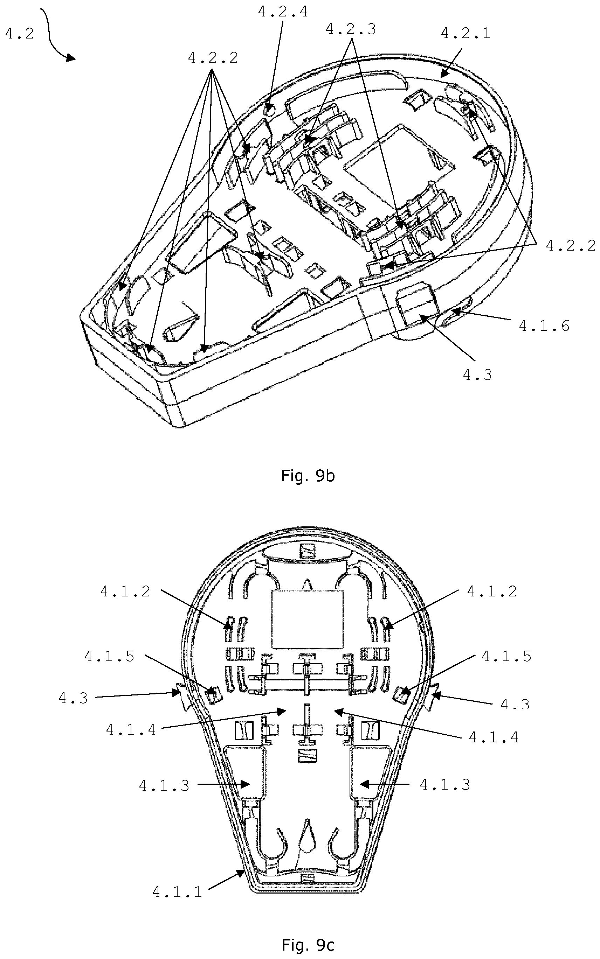

   - Figure 9b is a bottom perspective view of the module of adaptors;
   - Figure 9c is a top view of the module of adaptors;

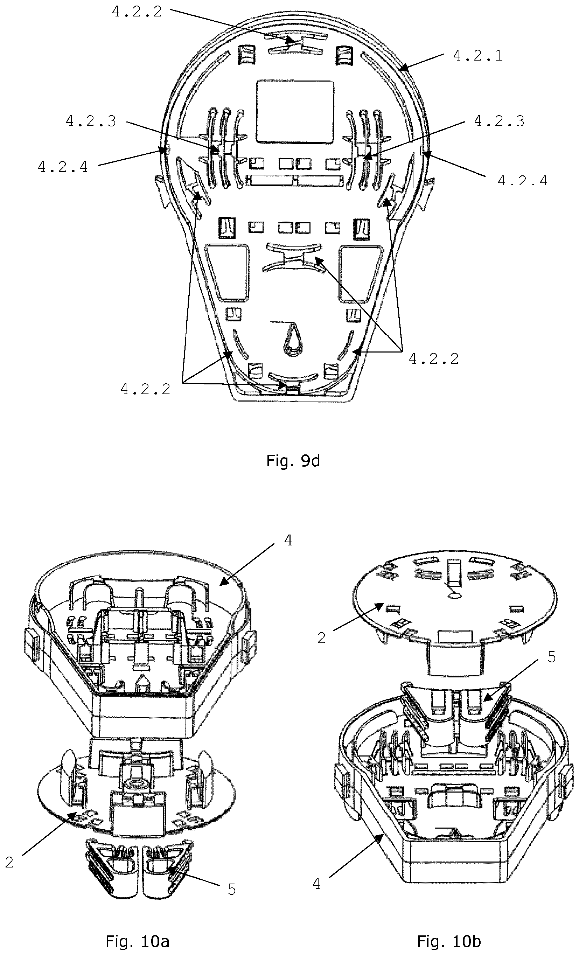

   - Figure 9d is a bottom view of the module of adapters.
Figures 10a and 10b are frontal exploded views from the module of adaptors along with the fusion module and the two wedges:
   - Figure 10a is a top frontal exploded view of the module of adaptors along with the fusion module and the two wedges;
   - Figure 10b is a bottom frontal exploded view of the module of adaptors along with the fusion module and the two wedges.

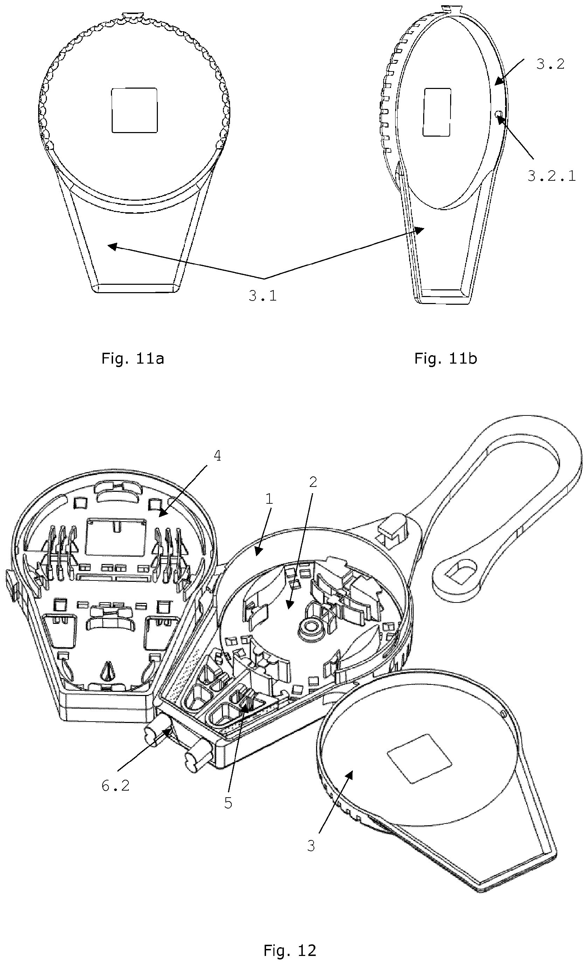

Figures 11a and 11b are views of the lid of the device:
   - Figure 11a is a top view of the lid of the device;
   - Figure 11b is a bottom perspective view of the lid of the device.
Figure 12 is a perspective view of the lid, body of the equipment, the fusion module, the module of adaptors and the sealing rubber top inserted in the body of the device.

In the figures are visible their various components and accessories:
- 1.: Body of the equipment
1.1. Base of the body
1.2. Wedge separator
1.3. Wedge fixation/fitting mean
1.4. Body wall
1.4.1. Body wall interior
1.5. Clamping loop
1.6. Eyebolt
1.7. Fitting hole of the fixation mean
1.8. Rotation grove
1.9. Fitting for the body
1.10. Lateral openings

- 2.: Fusion module
2.1. Fusion module base
2.2. Cable guides
2.3. Fusion holders
2.4. Internal ray
2.5. External ray
2.6. Support for cable fixation means
2.7. Embossing fitting of the fixation mean

- 3.: Lid
3.1. Peak
3.2. Lid wall
3.2.1. Embossing fitting of the lid

- 4.: Module of adaptors
4.1. Upper face
4.1.1. Upper face wall
4.1.2. Security means
4.1.3. Upper face tears
4.1.4. Adaptors holder
4.1.5. Upper face fibre guides
4.1.6. Fitting slots
4.2. Lower face
4.2.1. Lower face wall
4.2.2. Lower face fusion holders
4.2.3. Lower face fibre guides
4.2.4. Engaging embossments module
4.3. Lateral plug

- 5.: Wedges
5.1. Body fixation/fitting means
5.2. Slots to place cable protection
5.3. Wedge pin
5.4. Lateral slots

- 6.: Seals
6.1. Body seal
6.2. Entry seal

### Detailed description of the Invention

The expression "pigtail" refers to a flexible cable belonging to the optical fibre with a connector at one of its extremities and cut fibre on the other extremity. This serves the purpose to fuse with another fibre to create an ending to the connector extremity.

"Fibre guides" refers to the holders whose function is to make the fibre meet the minimum bending radii indicated in the ITU standards and route them to the place where they are intended to terminate.

"SC Connector" refers to a connector used as a mechanism to terminate the fibre signal allowing it to be connected to one of the adaptor SC endings.

"LC Connector" is a mechanism similar in function to an SC connector but smaller in size.

The small boot is the sheath of flexible rubber, which protects the entry point where the fibre meets the connector and should not be longer than 10 mm.

Expressions such as: "substantially circular", "substantially plane", "substantially trapezoidal", "substantially isosceles triangular", "substantially circular", "substantially similar", shall be construed as preferred embodiments for carrying out the invention since it can operate with other embodiments.

By "substantially diametrically opposed", "substantially centered", shall be construed as preferred positions for carrying out the invention since it can operate with other positions.

Such terms as "base" and "surface" used in the description shall be construed only for descriptive purposes and are not intended necessarily for describing relative positions. It is to be noted that the terms are used interchangeably in appropriate circumstances and that the embodiments of the invention described herein are capable of working in other orientations other than those herein described or illustrated.

The present invention relates to an equipment for telecommunication networks, more specifically, to an equipment for mooring, connecting, accommodating and deriving external fibre optic cables.

In a first embodiment, the equipment comprises a body of the equipment (1), a fusion module (2), a lid (3), at least one module of adaptors (4), two wedges (5) and seals (6).

In a second embodiment, the equipment comprises a body of the equipment (1), a fusion module (2), a lid (3), two wedges (5) and seals (6).

The body of the equipment (1) comprises a base of the body (1.1) which includes two sections, a first section with a substantially circular shape to which is coupled a second section with a substantially isosceles trapezoidal shape where the wedge separator (1.2) and the wedge fixation/fitting mean (1.3) are fixed. The base of the body (1.1) is surrounded by the body wall (1.4) in which is inserted at least one rotation groove (1.8) and at least one fitting for the body (1.9). On a substantially diametrical opposite position to the second section, a section with a substantially isosceles trapezoidal shape with a substantially round hypotenuse, in which the eyebolt (1.6) is inserted for the placement of the clamping loop (1.5). Substantially centered in the section substantially circular of the base of the body (1.1) is inserted a fitting hole of the fixation mean (1.7). At the exterior extremity of the second section there are lateral openings (1.10) to fit the entry seal (6.2).

In one embodiment, the fusion module (2) has a substantially circular shape, comprises a fusion module base (2.1) where the cable guides (2.2) are settled, fusion holders (2.3), internal rays (2.4), external rays (2.5), support for cable fixation means (2.6) and embossing fitting of the fixation mean (2.7).

This component, the fusion module (2), can present as many embodiments as necessary, as it is completely customized according to the necessities of the installation to be done.

The fusion module (2) fits into the body of the equipment (1) by settling and fitting the fusion module base (2.1) on the substantially circular section of the base of the body (1.1), which allows its removability.

The lid (3) substantially resembles the format of the body of the equipment (1), with two sections, one section substantially circular in format surrounded by the lid wall (3.2), to which a peak (3.1) with a substantial isosceles trapezoidal format is connected. On the lid wall (3.2) are incorporated the embossing fitting of the lid (3.2.1) to consequently fit onto the rotation groove (1.8).

The module of adaptors (4) have a substantially similar shape to the shape of the body of the equipment (1) and that of the lid (3) and is divided in two parts:
- The upper face (4.1) surrounded by the upper face wall (4.1.1), has built in on its surface security means (4.1.2), upper face tears (4.1.3), adaptors holder (4.1.4), upper face fibre guides (4.1.5) and fitting slots (4.1.6);
- The lower face (4.2), is surrounded by the lower face wall (4.2.1), are incorporated lower face fusion holders (4.2.2), lower face fibre guides (4.2.3) and engaging embossments module (4.2.4);
- On the exterior of the upper face wall (4.1.1) and of the lower face wall (4.2.1), there are lateral plugs (4.3) to fit the module of adaptors (4) adjacent when opened, allowing it for an intervention to be made without worrying the module of adaptors (4) might fall. After intervening, the module of adaptors (4) is detached from the lateral plug (4.3), being closed with the rotation system.

The wedges (5) have a body fixation/fitting means (5.1), slots to place the cable protection (5.2), wedge pins (5.3) and lateral slots (5.4) to smash the cable. The fitting of the wedges (5) onto the body of the equipment (1) is done by sliding the body fixation/fitting means (5.1) through the wedge fixation/fitting mean (1.3) thus allowing both pieces to fit together. The wedges (5) are separated by a wedge separator (1.2) and are intended to house at least one input cable and an equal number of output cables. The input cables are fixed in one wedge and the output cables are fixed in the other wedge, allowing interventions to be done, in an independent way, in the input or in the output cable, without losing the cable fixation.

In one embodiment and referring to the figures, the cable enters the equipment between the lateral slots (5.4) to smash the cable and the body wall interior (1.4.1). The cable is then forwarded through the lateral slot (5.4) to the wedge pin (5.3), where it is fixed by a fixation element namely but not exclusively a knurled clamp, to avoid sliding. When fitting the wedges (5) into the body of the equipment (1), the cables is fixed through smashing against the body wall interior (1.4.1), which has ledges to increase friction.

In the cut cable case, the procedure is similar except it exists at least one more security system on the wedges (5), which allows fixating the cable coating material in the slots to place the cable protection (5.2) with a knot, thus increasing the traction resistance without deteriorating the cable.

The cable is then forwarded to the fusion module (2), which works as winding for uncut cable through the external ray (2.5) and fixed by the cable guides (2.2). For the sectioned cables, the fusion module (2) allows the coiling of the excess fibre in the internal ray (2.4) or in the external ray (2.5), and carry out fusions on the fusion holders (2.3) with breaks, which prevents the fusion from loosening the lateral or vertical movements of the equipment when installed.

In the internal ray (2.4) and in the external ray (2.5) of the fusion module (2), there are supports for cable fixation means (2.6). These supports for cable fixation means (2.6) are namely but not exclusively, knurled clamps, which avoid fibre to loosen.

In a second embodiment, the equipment of the invention comprises one module of adaptors (4), which allows connectors to be installed on the adaptors holder (4.1.4) on the upper face (4.1). The connectors are, namely but not exclusively, Simple SC connectors or Duplex LC connectors. This solution allows an interconnection to be made between the connectors and cables.

The module of adaptors (4) allows to coupling up to two pairs of optic cables with connectors, and fits into the body of the equipment (1) with a rotation system to close the components by fitting the engaging embossments module (4.2.4) on the rotation groove (1.8) and, to allow an easy intervention in the components, the lateral plug (4.3) in the fitting for the body (1.9).

The adaptors holders (4.1.4) incorporates locking means that ensure the locking of the connectors, in order to avoid the movement of the connectors in possible movements of the equipment. The locking means are, namely but not exclusively, knurled clamp.

Thus, the pigtails with small boot connectors are placed in the SC and LC connectors, which fibre is redirected through the upper face fibre guides (4.1.5) near the upper face wall (4.1.1). The passage of the fibre from the upper face (4.1) to the lower face (4.2) is done through the upper face tears (4.1.3), symmetrically opposed, and redirected through the lower face fibre guides (4.2.3), being the winding and storage of the fibre done near to the lower face wall (4.2.1).

The fibres of the external cable, with a diameter of between 1 mm to 10 mm, more specifically between 2 mm and 6 mm, preferably 4 mm, pass through the body of the equipment (1) to the lower face (4.2) of the module of adaptors (4), going through the lateral left entrance near the lower face fusion holders (4.2.2) of the module of adaptors (4), being directed to the substantially circular region of the lower face (4.2) of the module of adaptors (4) and fixed on the lower face fibre guides (4.2.3).

The union of the fibre of the external cable and the pigtail fibres is done through fusion in the lower face fusion holders (4.2.2) which have locking means to block the movement of the fusions.

In a first embodiment, the lock of the equipment is done through the embossing fitting of the lid (3.2.1) in the fitting slots (4.1.6) of the module of adaptors (4).

In a second embodiment, in which the module of adaptors (4) does not exist, the lock of the equipment is done through the embossing fitting of the lid (3.2.1) in the rotation groove (1.8) of the body of the equipment (1).

The tightness near the wedges (5) is ensured by a slight inclination of the peak (3.1) which creates pressure on the body seals (6.1) of the body of the equipment (1).

The equipment is fixed, namely but not exclusively, to a pole or to a wall as mooring and with a fixed knot on the eyebolt (1.6) existent on the body of the equipment (1) or through a fitting hole of the fixation mean (1.7) in the embossing fitting of the fixation mean (2.7).

The equipment complies to the most elevated safety and protection rules according to internationally defined standards, being this the level of protection guaranteed by the material at the entrance of the equipment entry seals (6.2) which fits into the lateral openings (1.10) of the inferior segment of the body of the equipment (1) and the material of the surrounding segment of the wedges (5), which surrounds the body of the equipment (1). This level of protection allows the utilization of this equipment on poles, facades and pavement boxes.

## Claims

1. Equipment for mooring, connecting, accommodating and deriving external fibre optic cables on a support, comprising:
- a body of the equipment (1);
- the body of the equipment (1) comprising a wedge fixation/fitting means (1.3);
- a lid (3);
- seals (6);
- zero or at least one of the components:
- a fusion module (2),
- a module of adaptors (4);
- two wedges (5), each comprising:
- a body fixation/fitting means (5.1) for fitting the wedge to the wedge fixation/fitting means of the body of the equipment;
**characterised in that**
- the body of the equipment (1) further comprises a body wall interior (1.4.1) with ledges to increase friction,
wherein each wedge (5) further comprises:
- slots to place a cable protection (5.2) into which cable coating material of a fibre optic can be fixed with a knot,
- wedge pins (5.3) for fixating the fibre optic cable with a fixation element, and
- lateral slots (5.4) for fixating the fibre optic cable by pressing it against the body wall interior (1.4.1) of the body of the equipment (1).

2. Equipment according to claim 1, wherein the equipment does comprise the fusion module (2), the fusion module (2) being configured to fit into the body of the equipment (1) by settling and fitting a fusion module base (2.1) on a substantially circular section of a base of the body (1.1).

3. Equipment according to claim 1, wherein the equipment does comprise the module of adapters (4), the module of adapters (4) being configured to fit into the body of the equipment (1) with a rotation system to close the components by fitting an engaging embossments module (4.2.4) on a rotation groove (1.8) and a lateral plug (4.3) in a fitting for the body (1.9).

4. Equipment according to claim 1 wherein the two wedges (5) are fixed to the body of the equipment (1) by sliding the fixation/fitting mean in the body (5.1) through the wedge fixation/fitting mean (1.3).

5. Equipment according to claim 1 wherein the two wedges (5) are separated by a wedge separator (1.2).

6. Equipment according to any of the previous claims wherein the equipment is fixed to a pole or to a wall as mooring and with a fixed knot on an eyebolt (1.6).

7. Equipment according to any of the claims 1 to 5 wherein the equipment is fixed to a pole or to a wall through a fitting hole of the fixation mean (1.7) in a embossing fitting of the fixation mean (2.7).

8. Equipment according to any of the previous claims wherein the cable enters the equipment between lateral slots (5.4) and the body wall interior (1.4.1), being then forwarded through the lateral slots (5.4) to the wedge pin (5.3) where it is fixed by a fixation element.

9. Equipment according to any of the previous claims wherein the cable being forwarded to the fusion module (2) for winding the cable in an external ray (2.5) or in an internal ray (2.4) being fixed by cable guides (2.2) and the fusions being carried out in the fusion holders (2.3).

10. Equipment according to any of the previous claims wherein the lock of the equipment being done through the embossing fitting of the lid (3.2.1) in the fitting slots (4.1.6) of the module of adaptors (4).

11. Equipment according to any of the claims 1 to 9 wherein the lock of the equipment being done through the embossing fitting of the lid (3.2.1) in the rotation groove (1.8) of the body of the equipment (1).

## Patentansprüche

1. Vorrichtung zum Verankern, Verbinden, Aufnehmen und Ableiten von externen Lichtwellenleitern auf einem Träger, bestehend aus:
- einem Gehäuse der Vorrichtung (1);
- wobei das Gehäuse der Vorrichtung (1) aus Folgendem besteht: Keilbefestigung / Befestigungsmittel (1.3);
- Deckel (3);
- Versiegelungen (6);
- und keine oder mindestens eine der Komponenten aus:
- Fusionsmodul (2),
- Modul mit Adaptern (4);
- zwei Keilen (5), jeweils bestehend aus:
- Gehäusebefestigung / Gehäusepassmittel (5.1) zur Befestigung des Keils an der Keilbefestigung des Gehäuses / dem Befestigungsmittel des Gehäuses der Vorrichtung;
**dadurch gekennzeichnet, dass**
- das Gehäuse der Vorrichtung (1) eine zusätzliche Innenwand (1.4.1) mit Leisten zur Erhöhung der Reibung aufweist,
wobei jeder Keil (5) ferner aus Folgendem besteht:
- Schlitzen zum Anbringen eines Kabelschutzes (5.2), in den die Kabelisolierung eines Lichtwellenleiters mit einem Knoten befestigt werden kann,
- Keilstiften (5.3) zur Befestigung des Lichtwellenleiters mit einem Befestigungselement, und
- seitlichen Schlitzen (5.4) zur Befestigung des Lichtwellenleiters durch Andrücken gegen die Innenwand (1.4.1) des Vorrichtungsgehäuses (1).

2. Vorrichtung nach Anspruch 1, wobei die Vorrichtung das Fusionsmodul (2) umfasst und das Fusionsmodul (2) so konfiguriert ist, dass es in das Gehäuse der Vorrichtung (1) passt, indem eine Seite des Fusionsmoduls (2.1) auf einen weitgehend kreisförmigen Abschnitt einer Seite des Gehäuses (1.1) gesetzt und eingepasst wird.

3. Vorrichtung nach Anspruch 1, wobei die Vorrichtung das Modul mit Adaptern (4) umfasst und das Modul mit Adaptern (4) so konfiguriert ist, dass es mit einem Rotationssystem zum Schließen der Komponenten durch Einpassen in ein Sickenmodul (4.2.4) in einer Kreisförmigen Nut (1.8) und mit einem seitlichen Stopfen (4.3) in einer Gehäuseeinpassung (1.9) in das Gehäuse der Vorrichtung eingesetzt werden kann (1).

4. Vorrichtung nach Anspruch 1, bei der die beiden Keile (5) am Gehäuse der Vorrichtung (1) befestigt werden, indem das Gehäusebefestigung / Gehäusepassmittel (5.1) durch das Keilbefestigung / Befestigungsmittel (1.3) geschoben wird.

5. Vorrichtung nach Anspruch 1, wobei die beiden Keile (5) durch einen Keilseparator (1.2) getrennt sind.

6. Vorrichtung nach einem der vorhergehenden Ansprüche, wobei die Vorrichtung an einem Mast oder an einer Wand als Verankerung und mit einem festen Knoten an einer Ringschraube (1.6) befestigt ist.

7. Vorrichtung nach einem der Ansprüche 1 bis 5, wobei die Vorrichtung durch eine Befestigungsöffnung des Befestigungsmittels (1.7) in eine Sicke des Befestigungsmittels (2.7) an einem Pfosten oder an einer Wand befestigt ist.

8. Vorrichtung nach einem der vorhergehenden Ansprüche, bei dem das Kabel zwischen seitlichen Schlitzen (5.4) und der Gehäusewandinnenseite (1.4.1) in die Vorrichtung eintritt und dann durch die seitlichen Schlitze (5.4) zum Keilstift (5.3) weitergeleitet wird, wo es durch ein Befestigungselement befestigt wird.

9. Vorrichtung nach einem der vorhergehenden Ansprüche, bei der das Kabel dem Fusionsmodul (2) zugeführt wird um das Wickeln des Kabels in einem externen Strahl (2.5) oder in einem internen Strahl (2.4) ermöglicht wird, wobei es durch Kabelführungen (2.2) fixiert wird und die Fusion in den Fusionshaltern (2.3) erfolgt.

10. Vorrichtung nach einem der vorhergehenden Ansprüche, wobei die Verriegelung der Vorrichtung durch die Sickenpassung des Deckels (3.2.1) in den Passschlitzen (4.1.6) des Moduls mit Adaptern (4) erfolgt.

11. Vorrichtung nach einem der Ansprüche 1 bis 9, wobei die Verriegelung der Vorrichtung durch die Sickenpassung des Deckels (3.2.1) in der kreisförmigen Nut (1.8) des Vorrichtungsgehäuses (1) erfolgt.

## Revendications

1. Équipement pour amarrer, relier, placer et dériver des câbles à fibre optique externes sur un support, comprenant:
- une structure de l'équipement (1);
- la structure de l'équipement (1) comprenant un moyen de fixation/d'ajustement de la clavette (1.3);
- un couvercle (3);
- des joints (6);
- aucun ou au moins un des composants:
- un module de fusion (2),
- un module d'adaptateurs (4);
- deux clavettes (5), comprenant chacune:
- un moyen de fixation/d'ajustement de la structure (5.1) pour ajuster la clavette au moyen de fixation/d'ajustement de la structure de l'équipement;
**caractérisé en ce que**
- la structure de l'équipement (1) comprend en outre un intérieur de la paroi de la structure (1.4.1) avec des rebords pour augmenter la friction,
dans lequel chaque clavette (5) comprend en outre:
- des fentes pour placer une protection de câble (5.2) dans laquelle le matériau de revêtement du câble d'une fibre optique peut être fixé à l'aide d'un noeud,
- des goujons de remoulage à clavette (5.3) pour fixer le câble à fibre optique avec un élément de fixation, et
- des fentes latérales (5.4) pour fixer le câble à fibre optique en le pressant contre l'intérieur de la paroi de la structure (1.4.1) de la structure de l'équipement (1).

2. Équipement selon la revendication 1, dans lequel l'équipement comprend le module de fusion (2), le module de fusion (2) étant configuré pour s'adapter dans la structure de l'équipement (1) en installant et en adaptant une base de module de fusion (2.1) sur une section sensiblement circulaire d'une base de la structure (1.1).

3. Équipement selon la revendication 1, dans lequel l'équipement comprend le module d'adaptateurs (4), le module d'adaptateurs (4) étant configuré pour s'adapter dans la structure de l'équipement (1) avec un système de rotation pour fermer les composants en adaptant un module de bossages d'engagement (4.2.4) sur une rainure de rotation (1.8) et un bouchon latéral (4.3) dans un raccord pour la structure (1.9).

4. Équipement selon la revendication 1, dans lequel les deux clavettes (5) sont fixées à la structure de l'équipement (1) en faisant glisser le moyen de fixation/d'ajustement dans la structure (5.1) à travers le moyen de fixation/d'ajustement de la clavette (1.3).

5. Équipement selon la revendication 1, dans lequel les deux clavettes (5) sont séparées par un séparateur de clavettes (1.2).

6. Équipement selon l'une quelconque des revendications précédentes, dans lequel l'équipement est fixé à un poteau ou à un mur comme amarrage et avec un noeud fixe sur un boulon à oeil (1.6).

7. Équipement selon l'une quelconque des revendications 1 à 5, dans lequel l'équipement est fixé à un poteau ou à un mur à travers un trou de montage du moyen de fixation (1.7) dans un raccord de bossage du moyen de fixation (2.7).

8. Équipement selon l'une quelconque des revendications précédentes, dans lequel le câble pénètre dans l'équipement entre les fentes latérales (5.4) et l'intérieur de la paroi de la structure (1.4.1), étant ensuite acheminé à travers les fentes latérales (5.4) jusqu'au goujon de remoulage à clavette (5.3) où il est fixé par un élément de fixation.

9. Équipement selon l'une quelconque des revendications précédentes, dans lequel le câble est acheminé vers le module de fusion (2) pour enrouler le câble dans un rayon externe (2.5) ou dans un rayon interne (2.4) en étant fixé par des guides de câble (2.2) et les fusions étant effectuées dans les supports de fusion (2.3).

10. Équipement selon l'une quelconque des revendications précédentes, dans lequel le verrouillage de l'équipement est réalisé par le raccord de bossage du couvercle (3.2.1) dans les fentes d'emboîtement (4.1.6) du module d'adaptateurs (4).

11. Équipement selon l'une quelconque des revendications 1 à 9, dans lequel le verrouillage de l'équipement est réalisé par le raccord de bossage du couvercle (3.2.1) dans la rainure de rotation (1.8) de la structure de l'équipement (1).
